# EUROPEAN PATENT SPECIFICATION

(11) **EP 4 331 460 B1**
(45) Date of publication and mention of the grant of the patent: **15.04.2026**
(21) Application number: 22210613.0
(22) Date of filing: 30.11.2022
(51) Int. Cl.: A47L 11/40

(54) **INTERACTIVE METHOD, ELECTRONIC DEVICE, AND STORAGE MEDIUM**
INTERAKTIVES VERFAHREN, ELEKTRONISCHE VORRICHTUNG UND SPEICHERMEDIUM
PROCÉDÉ INTERACTIF, DISPOSITIF ÉLECTRONIQUE ET SUPPORT D'INFORMATIONS

(30) Priority: 30.08.2022 CN 202211058907
(43) Date of publication of application: 06.03.2024
(73) Proprietor: Beijing Xiaomi Mobile Software Co., Ltd., Beijing 100085 (CN)
(72) Inventor: GAN, Yu, Beijing, 100085 (CN); QU, Yingjie, Beijing, 100085 (CN)
(74) Representative: dompatent

(56) References cited:
- EP-B1- 3 121 677
- EP-B1- 3 149 862
- EP-B1- 3 459 420
- WO-A1-2019/004742
- US-A1- 2014 303 775

## Description

### TECHNICAL FIELD

The disclosure relates to the technical field of human-machine interaction in robots, and in particular, to an interactive method, an electronic device and a storage medium.

### BACKGROUND

In recent years, with the progress of science and technology, robots such as sweeping robots, multi-legged robots and humanoid robots have gradually emerged. These robots can assist or replace human labor in production and life, thus reducing human labor. For example, the common sweeping robot can replace humans to clean houses, thus saving the user from heavy housework.

In the related art, WO2019004742A1 provides a mobile terminal according to an aspect of the present invention comprises: a wireless communication unit for receiving information relating to a plurality of moving robots included in a robot system; a display unit for displaying a user interface screen for a first moving robot among the plurality of moving robots; and a control unit for, when an input for a designated area cleaning setting item included in the user interface screen is received, controlling the display unit to display a designated area cleaning setting screen through which one or more areas can be designated in a section to which the first moving robot has been assigned. Therefore, a user can conveniently designate cleaning areas of the robots included in the robot system.

In the related art, EP3121677B1 provides a robot cleaner system comprising a robot cleaner configured to perform cleaning, while driving automatically; a recharging base for the robot cleaner; and a remote control device configured to perform remote-control of the robot cleaner, wherein the remote control device generates mapping information between an actual region and a virtual region based on image information generated by a camera on the robot cleaner and a region near the robot cleaner or image information generated by a camera on the recharging base and a region near the recharging base.

In the related art, US20140303775A1 provides an automatic moving apparatus includes: a storage unit configured to store a traveling method; an image detection unit configured to acquire a captured image; a driving unit having one or more wheels and driving the wheels according to a driving signal: and a control unit configured to extract a traveling direction from the traveling method stored in the storage unit in a first mode, extract a traveling direction indicated by a sensing target from the captured image acquired by the image detection unit in a second mode, and generate a driving signal for moving the automatic moving apparatus in the extracted traveling direction.

In the related art, EP3149862B1 provides a mobile device, cleaning robot, and method for controlling the cleaning robot. The mobile device includes a capturing unit; a display for displaying an image of a cleaning robot obtained from the capturing unit and receiving a touch; and a controller for controlling the cleaning robot to move to a location that corresponds to the input touch.

### SUMMARY

In order to overcome the problems existing in the related art, the examples of the invention provide an interactive method, an electronic device and a storage medium, so as to overcome the defects in the related arts.

According to a first aspect of the present invention, there is provided an interactive method applied to a terminal device that establishes a connection with a robot in advance. the method including:
displaying a control interface of the robot, where the control interface includes a motion map and an identifier of the robot; and
in response to an operation of a user on the identifier of the robot, controlling the robot to perform corresponding functions in a real environment corresponding to the motion map.

Optionally, the controlling the robot to perform corresponding functions in a real environment corresponding to the motion map in response to an operation of a user on the identifier of the robot includes:
in response to the operation of the user on the identifier of the robot, displaying a remote control interface, where at least one remote control key is provided in the remote control interface; and
in response to an operation of the user on the at least one remote control key, controlling the robot to move in the real environment corresponding to the motion map.

Optionally, the displaying a remote control interface in response to the operation of the user on the identifier of the robot includes:
in response to the operation of the user on the identifier of the robot, display a control mode selection interface, where the control mode selection interface is provided with a remote control option; and
in response to an operation of the user on the remote control option, display the remote control interface.

Optionally, the control mode selection interface is further provided with a device search option;
the method further includes:
in response to an operation of the user on the device search option, controlling the robot to perform a preset reminding action.

Optionally, the remote control interface is further provided with the device search option;
the method further includes:
in response to an operation of the user on the device search option, controlling the robot to perform a preset reminding action.

According to the present invention, the controlling the robot to perform corresponding functions in a real environment corresponding to the motion map in response to an operation of a user on the identifier of the robot includes:
in response to the operation of the user on the identifier of the robot, controlling the robot to perform a preset reminding action.

Optionally, the reminding action includes at least one of the following: audio playback, vibration and light flicker.

Optionally, the controlling the robot to perform corresponding functions in a real environment corresponding to the motion map in response to an operation of a user on the identifier of the robot includes:
in response to the operation of the user for moving the identifier of the robot to a target position in the motion map, control the robot to move to a position corresponding to the target position in the real environment.

Optionally, the controlling the robot to move to a position corresponding to the target position in the real environment in response to the operation of the user for moving the identifier of the robot to a target position in the motion map includes:
when the robot is in an operation state, in response to the operation of the user for moving the identifier of the robot to the target position in the motion map, control the robot to stop operating and controlling the robot to operate after the robot moves to the position corresponding to the target position in the real environment.

Optionally, the motion map includes a plurality of motion zones, and each motion zone corresponds to a local space in the real environment and has a corresponding operation mode;
the controlling the robot to stop operating and controlling the robot to operate after the robot moves to the position corresponding to the target position in the real environment includes:
controlling the robot to stop operating, and controlling the robot to operate in an operation mode corresponding to the target region after the robot is moved to the local space corresponding to the target zone in the real environment, where the target zone is a motion zone to which the target position belongs.

Optionally, after the robot completes the operation in the local space corresponding to the target zone, further including at least one of the following:
controlling the robot to move to a base station in the real environment; and
in the real environment, controlling the robot to move to a local space corresponding to a first motion zone in a non-operation state in an operation sequence, where the operation sequence includes a plurality of motion zones arranged in sequence.

Optionally, the controlling the robot to move to a position corresponding to the target position in the real environment in response to the operation of the user for moving the identifier of the robot to a target position in the motion map includes:
in response to a start position of a motion operation of the user and the target position being respectively in different motion zones in the motion map, control the robot to move to a position corresponding to the target position in the real environment.

According to a second aspect of the present invention, there is provided an electronic device, including a memory and a processor, where the memory is configured to store computer instructions that may be executed on the processor, and the processor is configured to implement the interactive method according to the first aspect when executing the computer instructions.

According to a third aspect of the present invention, there is provided a non-transitory computer-readable storage medium storing a computer program, where the method according to the first aspect is implemented when the program is executed by the processor.

The technical solutions provided by the examples of the invention may include the following beneficial effects:

According to the interactive method provided by the examples of the invention, the user may input operation into the identifier of the robot in the control interface by displaying the control interface of the robot, and the robot is controlled to perform corresponding functions in the real environment corresponding to the motion map in response to the operation of the user on the identifier of the robot. In other words, the user may directly input the operation to the identifier of the robot in the control interface with the motion map, so as to control the robot to perform the corresponding functions, such as manual remote control. Therefore, an interactive interface provided by the invention is relatively clear and direct, interaction logic is relatively simple and convenient, and discoveries and access of important functions such as the manual remote control have no obstacles, so as to facilitate using for the user, such that operation convenience and use experience of the user are greatly improved.

### BRIEF DESCRIPTION OF THE DRAWINGS

The accompanying drawings herein are incorporated into the invention and constitute a part of the invention, show examples consistent with the present invention, and are used to explain the principle of the present invention together with the invention.
FIG. 1 is a flowchart of an interactive method according to an example of the invention;
FIG. 2 is a schematic diagram of a control interface according to an example of the invention;
FIG. 3 is a schematic diagram of a control mode selection interface according to an example of the invention;
FIG. 4 is a schematic diagram of a remote control interface according to an example of the invention;
FIG. 5 is a schematic diagram of a process of a user inputting a motion operation according to an example of the invention;
FIG. 6 is a schematic structural diagram of an interactive apparatus according to an example of the invention; and
FIG. 7 is a structural block diagram of an electronic device according to an example of the invention.

### DETAILED DESCRIPTION OF THE EMBODIMENTS

Exemplary examples will be described in detail here, and examples thereof are shown in the accompanying drawings. When the following descriptions refer to the drawings, the same numbers in different drawings indicate the same or similar elements, unless otherwise indicated. The implementation manners described in the following examples do not represent all implementation manners consistent with the invention. Instead, they are merely examples of apparatuses and methods consistent with some aspects of the invention described herein.

In recent years, with the progress of science and technology, robots such as sweeping robots, multi-legged robots and humanoid robots have gradually emerged. These robots can assist or replace human labor in production and life, thus reducing human labor. For example, the common sweeping robot can replace humans to clean houses, thus saving the user from heavy housework. The user may directly control the sweeping robot, or install an interactive program in an intelligent device to control the sweeping robot. In the related art, the interactive interface in the interactive program of the sweeping robot is relatively complex, the interaction logic is not clear, and the discovery and access of important functions are not convenient, resulting in low operation convenience and poor use experience of the user.

Especially a manual remote control function of the robot can facilitate the user to intervene in the motion and operation of the robot, so as to perform the motion and operation according to the intention of the user. However, the access and use of this function are hidden in an interface that is difficult for the user to find, and the operation is complex and chaotic, which is not conducive to the user in use and familiarity with this function, especially for new users who may not be aware of the existence of this function.

In order to overcome the problems existing in the related art, the examples of the invention provide an interactive method and apparatus, an electronic device and a storage medium, so as to overcome the defects in the related arts.

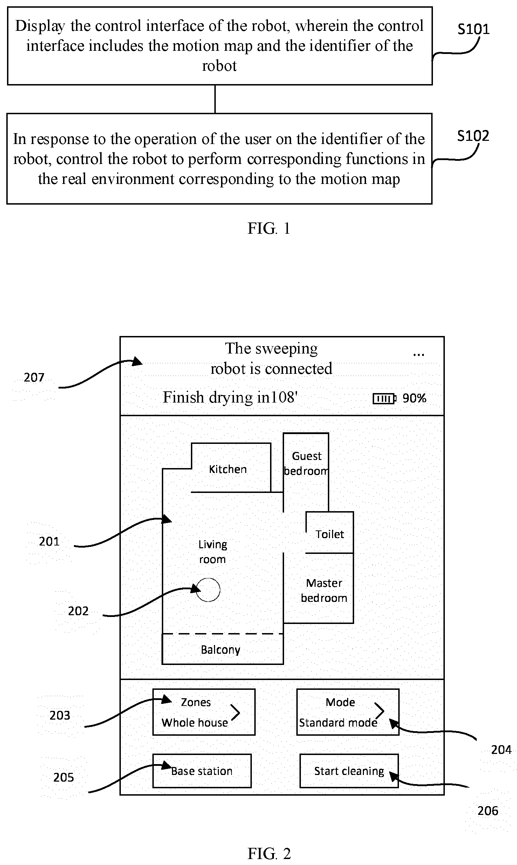

Based on this, in a first aspect, at least one example of the invention provides an interactive method. Referring to FIG. 1, it shows the flow of the method, including steps S101 to S102.

The method may be applied to a terminal device that establishes a connection with a robot in advance. The robot may be a sweeping robot, a multi-legged robot or a humanoid robot. The terminal device may be a smart phone, a tablet computer, etc., and may be connected to the robot through Bluetooth, WLAN (wireless local area network), etc. The terminal device may be installed with an application for controlling the robot, such as the application matching the robot provided by a robot manufacturer. The method may be an operation mode of the application.

In step S101, a control interface of the robot is displayed, where the control interface includes a motion map and an identifier of the robot.

The control interface of the robot may be an interface of the application installed on the terminal device for controlling the robot, such as a home page of the application. For example, referring to FIG. 2, the control interface may include a motion map 201, an identifier of the robot 202, a zone window 203 corresponding to a target space, an operation mode window 204, a base station identifier 205, a start identifier 206, a notification bar 207 (for displaying the a state of the robot, etc.), etc. The identifier of the robot 202 is in the motion map 201 and can display a position of the robot in a real environment.

The motion map is used to represent a real environment with a plurality of local spaces, and includes a plurality of motion zones which correspond to the plurality of local spaces one by one. The real environment is an environment involved in robot motion and operation, each local space is an independent unit in the real environment, and different local spaces have obvious boundaries that are easy to distinguish. For example, referring to FIG. 2, the motion map is a map used to represent a house, then the real environment is an entire environment of the house, and each room in the house becomes a local space as an independent unit, that is, the motion map is provided with the motion zone corresponding to each room.

It may be understood that the user may input operations to the identifier of the robot in the control interface, thus triggering step S102. Since the identifier of the robot and the motion map are in the same control interface, and the motion map is the area where the user operates most frequently when using the robot, the user may easily find the robot's manual remote control function, especially for new users who can find this function when using the robot for the first time.

In step S102, in response to the operation of the user on the identifier of the robot, the robot is controlled to perform corresponding functions in the real environment corresponding to the motion map.

The user may click, long press and slide the identifier of the robot.

The functions that the robot performs in the real environment may be remote control function, device search function, fixed-point moving function, etc.

It may be understood that an operation type input by the user for the identifier of the robot may establish a mapping relationship with the functions executed by the robot in advance, for example, the click operation corresponds to the remote control function, the long press operation corresponds to the device search function, and the slide operation corresponds to the fixed-point moving function. Thus, the robot may be controlled to perform the corresponding functions in response to the operations input by the user.

According to the interactive method provided by the examples of the invention, the user may input operation into the identifier of the robot in the control interface by displaying the control interface of the robot, and the robot is controlled to perform corresponding functions in the real environment corresponding to the motion map in response to the operation of the user on the identifier of the robot. In other words, the user may directly input the operation to the identifier of the robot in the control interface with the motion map, so as to control the robot to perform the corresponding functions, such as manual remote control. Therefore, an interactive interface provided by the invention is relatively clear and direct, interaction logic is relatively simple and convenient, and discoveries and access of important functions such as the manual remote control have no obstacles, so as to facilitate using for the user, such that operation convenience and use experience of the user are greatly improved.

In some examples of the invention, step S102 may be implemented according to the following two sub-steps to realize the manual remote control function of the robot:
the first sub-step: displaying the remote control interface in response to the operation of the user on the identifier of the robot, where at least one remote control key is arranged in the remote control interface. For example, the user may click the identifier of the robot.

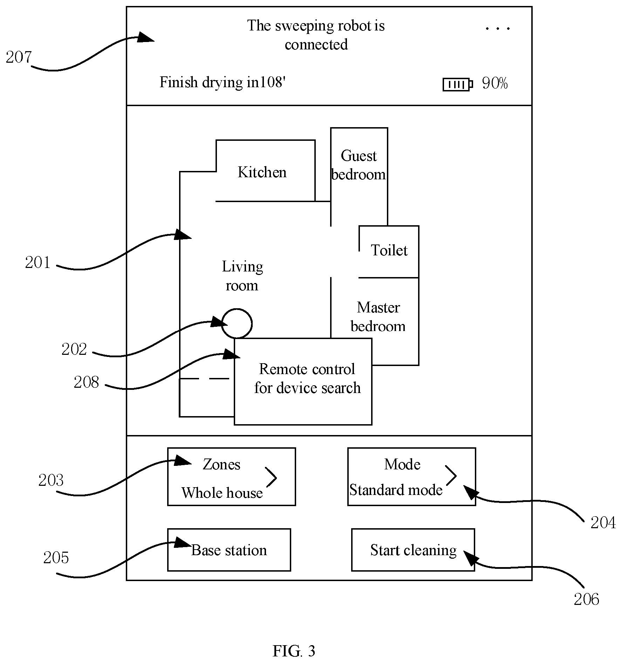

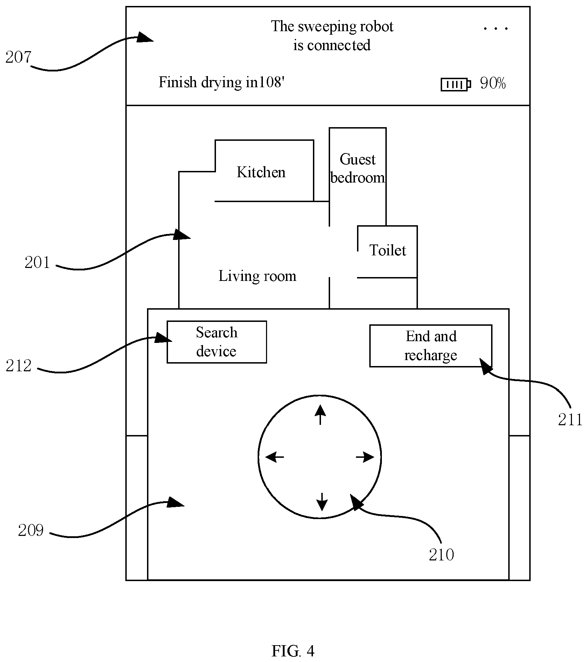

In one possible example, a control mode selection interface is displayed first in response to the (click) operation of the user on the identifier of the robot, where the control mode selection interface is provided with a remote control option. For example, referring to FIG. 3, which shows the control mode selection interface 208, the interface is overlaid on the control interface in the form of a window or pull-down menu, and "remote control" is the remote control option; next, in response to the (click) operation of the user on the remote control option, the remote control interface is displayed. For example, referring to FIG. 4, it shows the remote control interface 209, where the direction control area 210 is provided with a plurality of direction control keys. The user may control the robot to move in a corresponding direction in the real environment by clicking a direction control key.

Continuing to refer to FIG. 4, the remote control interface may further be provided with a recharge key 211 (that is, "End and recharge" in FIG. 4). The user may hide the control interface and control the robot to return to the base station by clicking the recharge key 211. This may make it more convenient to access and hide the remote control interface. In addition, scenarios where the robot needs manual remote control are to some extent caused by the abnormal automatic motion of the robot, so there is a need to return to the base station for recharging, and setting the recharge key can further adapt to the needs of the user and the state of the robot.

The second sub step: controlling the robot to move in the real environment corresponding to the motion map in response to the operation of the user on the at least one remote control key.

For example, the user clicks one direction control key, and in this step, the robot may be controlled to move in the corresponding direction in the real environment. The user clicks one operation mode control key, and in this step, the robot may be controlled to execute the operation mode in the real environment, such as controlling the sweeping robot to perform sweeping, mopping or other cleaning operations.

It may be understood that when the robot cannot automatically cross a complex obstacle environment, the user may use the manual remote control function to control the robot to implement crossing skillfully; the robot may also be provided with toy characteristics through manual remote control to increase its functions and user's fun.

During the use of the robot, because most of the scenarios are automatic motion and operation scenarios, the position of the robot will not always be concerned by the user. When the robot cannot move due to complex environment or low power and is in a relatively hidden position, it is difficult for the user to find the robot.

Referring to FIG. 3, the control mode selection interface is provided with a device search option (that is, "device search" in the figure); referring to FIG. 4, the remote control interface is also provided with the device search option 212. Based on some examples of the invention, the robot may be controlled to perform a preset reminding action in response to the (click) operation of the user on the device search option. For example, the reminding action includes at least one of the following: audio playback, vibration and light flicker.

In this example, by adding the device search option to the remote control interface or the control mode selection interface, it is convenient for the user to trigger the robot to perform the reminding action through simple operation, so as to find the robot. Moreover, the option and remote control related functions are integrated in one interface, thus further reducing the operation difficulty and improving the user's experience. Especially when the robot is trapped in a more complex environment, the user may first find the robot through the device search option and then use a manual remote control function controller to help the robot get rid of the environment according to the robot's environment, which is very convenient and easy to operate.

In some examples of the invention, step S102 may be performed in the following manner to implement the function of robot search:
in response to the operation of the user on the identifier of the robot, controlling the robot to perform a preset reminding action. For example, the user may input long press operation on the identifier of the robot to implement the function of robot search. The reminding action includes at least one of the following: audio playback, vibration and light flicker.

It may be understood that the corresponding relationship between the operation and the function performed by the robot in the above two examples is not a limitation on the execution mode of step S102; the operations corresponding to the above two functions may be adjusted, as long as two different operations are maintained to trigger two different functions. Here, the repeated examples will not be described in detail.

In this example, the robot is triggered to perform a reminding action through direct operation on the identifier of the robot in order to find the robot. Compared with the triggering mode in the previous example, the operation mode in this example is more direct, so it may further reduce the operation difficulty and improve the user's experience.

In some examples of the invention, since the identifier of the robot is located in the motion map to represent its position in the real environment, the user may control the robot motion by adjusting the position of the identifier of the robot in the motion map. That is, step S102 may be performed in the following way to realize the fixed-point moving function of the robot: the terminal device (i.e., the application for controlling the robot on the terminal device) controls the robot to move to the position corresponding to the target position in the real environment in response to the operation of the user of moving the identifier of the robot to the target position in the motion map, and for example, the operations input by the user for the identifier of the robot may be slide operation, dragging operation, etc.

It may be understood that when the robot is in an operation state, in response to the operation of the user for moving the identifier of the robot to the target position in the motion map, the robot may be controlled to stop operating and control the robot to operate after the robot moves to the position corresponding to the target position in the real environment. That is, when the user controls the motion of the robot by inputting the motion operation to the identifier of the robot, the operation may be stopped during the motion to improve the motion efficiency. For example, the robot is the sweeping robot, when the sweeping robot is performing cleaning operations such as sweeping and mopping, the user inputs the dragging operation to the identifier of the robot to change its position in the motion map. Then, the sweeping robot may be controlled to stop the cleaning operation, move to the position corresponding to the target position, and continue the cleaning operation after the motion is completed.

Because the motion map includes a plurality of motion zones, each motion zone corresponds to one local space in the real environment, and each motion zone has a corresponding operation mode. Based on this, when the robot is controlled to stop operating and continues to operate after moving to the position corresponding to the target position in the real environment, the robot may be controlled to stop operating, and after moving to the local space corresponding to the target zone in the real environment, the robot may operate in the operation mode corresponding to the target zone, where the target zone is the motion zone to which the target position belongs.

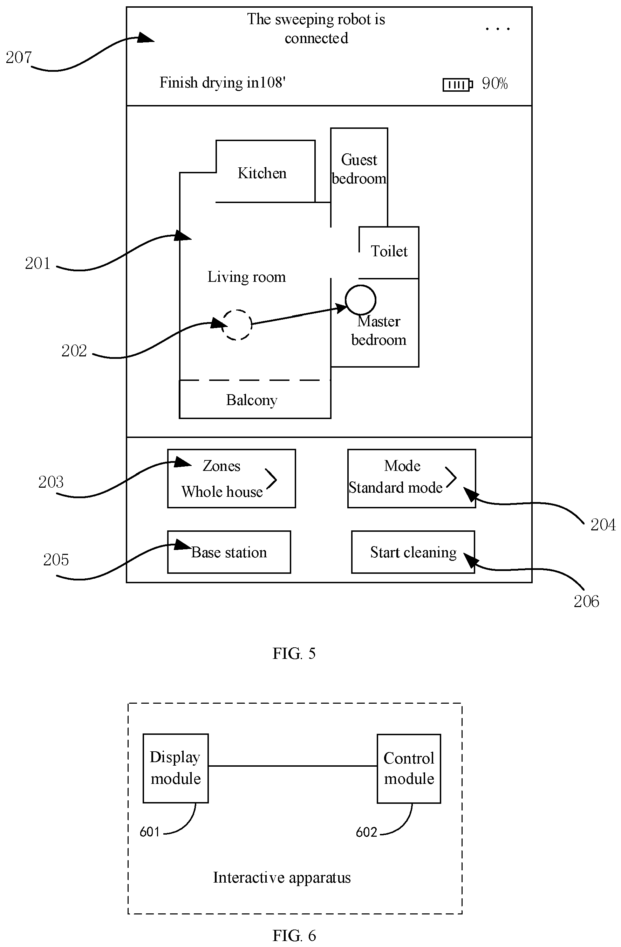

For example, referring to FIG. 5, it shows the motion map of the sweeping robot and the process of the user inputting the movement operation to the identifier of the robot. It may be seen from FIG. 5 that the motion map is a map used to represent the house, and the real environment is the entire environment of the house. Each room in the house becomes one local space as the independent unit, that is, there are motion zones corresponding to all rooms in the motion map, and each motion zone has a default or user-defined cleaning mode; the user drags identifier of the robot from the living room to the master bedroom, so the robot may be controlled to stop cleaning in the living room, and move to the master bedroom to continue cleaning in the master bedroom cleaning mode.

In this example, the user may change the position of the robot, especially the operation zone of the robot by inputting the movement operation to the identifier of the robot. When the operation zone of the robot is changed by the way in this example, it is often because the operation result of the robot in the current zone reaches the user's satisfaction, but the operation in the current zone is not completed in the robot's automatic control logic, for example, the sweeping robot cleans the living room to the user's satisfaction, but the sweeping robot in the automatic control logic still needs to continue to clean the living room. The automatic control logic of the robot is generated according to the user's operation, for example, after the user selects a target space and the operation mode of each motion zone in the target space, the automatic control logic is generated. The automatic control logic of the robot may include an operation sequence and an operation mode corresponding to each motion zone in the operation sequence. For example, the automatic control logic of the sweeping robot may include an operation sequence consisting of a plurality of rooms in a certain order in FIG. 4, as well as a cleaning mode for each room in the plurality of rooms.

Based on the above scenario, the robot may be controlled to move to the position corresponding to the target position in the real environment in response to a start position of a motion operation of the user and the target position being respectively in different motion zones in the motion map. That is, the movement operation in which the starting point position and target position are located in different motion zones is regarded as an effective movement operation, because this operation is often the user's intervention in the robot's automatic control logic, that is, the user wants the robot to end the operation in the current zone and enter the target zone for operation; while the movement operation in which the starting point position and the target position are in the same motion zone is considered invalid.

Based on the above scenario, after the robot completes the operation in the local space corresponding to the target zone, at least one of the following may be executed: controlling the robot to move to the base station in the real environment; in the real environment, controlling the robot to move to the local space corresponding to the first motion zone in the non-operation state in the operation sequence, where the operation sequence includes a plurality of motion zones arranged in sequence. For example, when the target zone or the current zone when the movement operation is performed is the last zone in the operation sequence, the robot may be controlled to move to the base station in the real environment, otherwise the robot may be controlled to move to the local space corresponding to the first motion zone in the non-operation state in the operation sequence in the real environment. In this manner, the automatic control logic may be continued to execute after the user gets involved in the automatic control logic of the robot and completes the operation in the target space according to the desires of the user, so as to ensure the accurate implementation of the automatic control logic and improve the user's experience.

According to the second aspect of an example of the invention, there is provided an interactive apparatus applied to the terminal device that establishes the connection with the robot in advance, and referring to FIG. 6, the apparatus includes:
a display module configured to display a control interface of the robot 601, where the control interface includes a motion map and an identifier of the robot; and
a control module 602 configured to control the robot to perform corresponding functions in a real environment corresponding to the motion map in response to an operation of a user on the identifier of the robot.

In some examples of the invention, the control module is specifically configured to:
in response to the operation of the user on the identifier of the robot, display a remote control interface, where at least one remote control key is provided in the remote control interface; and
in response to an operation of the user on the at least one remote control key, control the robot to move in the real environment corresponding to the motion map.

In some examples of the invention, when configured to display the remote control interface in response to the operation of the user on the identifier of the robot, the control module is specifically configured to:
in response to the operation of the user on the identifier of the robot, display a control mode selection interface, where the control mode selection interface is provided with a remote control option; and
in response to an operation of the user on the remote control option, display the remote control interface.

In some examples of the invention, the control mode selection interface is further provided with a device search option;
the apparatus further includes a positioning module configured to:
in response to an operation of the user on the device search option, control the robot to perform a preset reminding action.

In some examples of the invention, the remote control interface is further provided with the device search option;
the apparatus further includes a positioning module configured to:
in response to an operation of the user on the device search option, control the robot to perform a preset reminding action.

In some examples of the invention, the control module is specifically configured to:
in response to the operation of the user on the identifier of the robot, control the robot to perform a preset reminding action.

In some examples of the invention, the reminding action includes at least one of the following: audio playback, vibration and light flicker.

In some examples of the invention, the apparatus further includes a movement module which is configured to:
in response to the operation of the user for moving the identifier of the robot to a target position in the motion map, control the robot to move to a position corresponding to the target position in the real environment.

In some examples of the invention, when configured to control the robot to move to the position corresponding to the target position in the real environment in response to the operation of the user for moving the identifier of the robot to the target position in the motion map, the control module is specifically configured to:
when the robot is in an operation state, in response to the operation of the user for moving the identifier of the robot to the target position in the motion map, control the robot to stop operating and control the robot to operate after the robot moves to the position corresponding to the target position in the real environment.

In some examples of the invention, the motion map includes a plurality of motion zones, and each motion zone corresponds to a local space in the real environment and has a corresponding operation mode;
when configured to control the robot to stop operating and control the robot to continue to operate after the robot moves to the position corresponding to the target position in the real environment, the control module is specifically configured to:
control the robot to stop operating, and controlling the robot to operate in an operation mode corresponding to the target region after the robot is moved to the local space corresponding to the target zone in the real environment, where the target zone is a motion zone to which the target position belongs.

In some examples of the invention, the apparatus further includes at least one of a return module and an operation module:
the return module is configured to: after the robot completes the operation in the local space corresponding to the target zone, control the robot to move to a base station in the real environment; and
the operation module is configured to: in the real environment, control the robot to move to a local space corresponding to a first motion zone in a non-operation state in an operation sequence after the robot completes the operation in the local space corresponding to the target zone, where the operation sequence includes a plurality of motion zones arranged in sequence.

In some examples of the invention, when specifically configured to control the robot to move to the position corresponding to the target position in the real environment in response to the operation of the user for moving the identifier of the robot to the target position in the motion map, the control module is specifically configured to:
in response to a start position of a motion operation of the user and the target position being respectively in different motion zones in the motion map, control the robot to move to a position corresponding to the target position in the real environment.

In some examples of the invention, the robots include the sweeping robot.

With regard to the apparatus in the above examples, the specific manners that various modules perform operations have been described in detail in the examples related to the method of the first aspect, and details are not described herein.

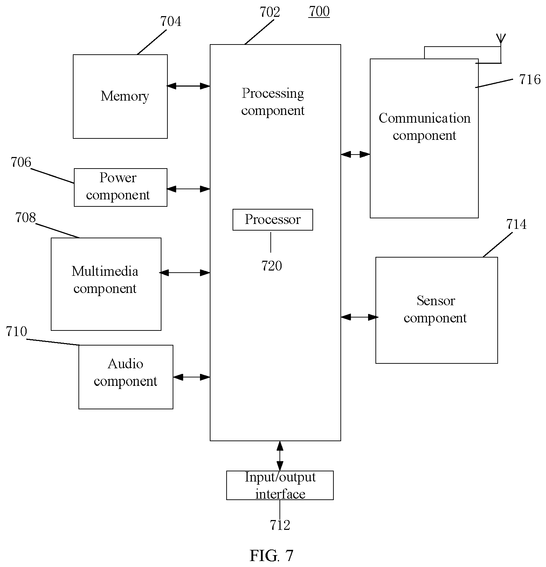

According to the third aspect of an example of the invention, referring to FIG.7, it shows a block diagram of an electronic device. For example, the electronic device 700 may be a mobile phone, a computer, a digital broadcasting terminal, a messaging device, a game console, a tablet device, a medical device, a fitness device, a personal digital assistant, etc.

Referring to FIG. 7, the electronic device 700 may include one or more of the following components: a processing component 702, a memory 704, a power component 706, a multimedia component 708, an audio component 710, an input/output (I/O) interface 712, a sensor component 714, and a communication component 716.

The processing component 702 usually controls the overall operations of the electronic device 700, such as operations associated with display, telephone call, data communication, camera operation and recording operation. A processing component 702 may include one or more processors 720 to execute instructions to complete all of or part of the steps of the above method. In addition, the processing component 702 may include one or more modules to facilitate the interaction between the processing component 702 and other components. For example, a processing component 702 may include a multimedia module to facilitate interaction between the multimedia component 708 and the processing component 702.

The memory 704 is configured to store various types of data to support the operations at the device 700. Examples of these data include instructions for any application or method operated on the electronic device 700, contact data, phone book data, messages, pictures, videos, etc. The memory 704 may be implemented by any type of volatile or nonvolatile storage device or a combination thereof, such as a static random access memory (SRAM), an electrically erasable programmable read-only memory (EEPROM), an erasable. programmable read-only memory (EPROM), a programmable read-only memory (PROM), a read-only memory (ROM), a magnetic memory, a flash memory, a magnetic disk or an optical disk.

The power component 706 supplies power to various components of the electronic device 700. The power component 706 may include a power management system, one or more power sources, and other components associated with power generation, management and distribution of the electronic device 700.

The multimedia component 708 includes a screen for providing an output interface between the electronic device 700 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, slides and gestures on the touch panel. The touch sensor may not only sense the boundary of the touch or slide, but also detect the duration and pressure associated with the touch or slide. In some examples, the multimedia component 708 includes a front camera and/or a rear camera. When the electronic device 700 is in an operation mode, such as a shooting mode or a video mode, the front camera and/or the rear camera can receive external multimedia data. Each front or rear camera may be a fixed optical lens system or have focal length and optical zoom capability.

The audio component 710 is configured to output and/or input audio signals. For example, the audio component 710 includes a microphone (MIC), and when the electronic device 700 is in the operation mode, such as a call mode, a recording mode and a voice recognition mode, the microphone is configured to receive external audio signals. The received audio signals may be further stored in the memory 704 or sent by the communication component 716. In some examples, the audio component 710 further includes a speaker for outputting audio signals.

The I/O interface 712 provides an interface between the processing component 702 and a peripheral interface module. The peripheral interface module may be a keyboard, a click wheel, a button, etc. The button may include but is not limited to a home button, a volume button, a start button and a lock button.

The sensor component 714 includes one or more sensors for providing various aspects of status assessment for the electronic device 700. For example, the sensor component 714 may detect the on/off state of the electronic device 700, and relative positions of components such as a display and a keypad of the electronic device 700. The sensor component 714 may also detect a position change of the electronic device 700 or one component of the electronic device 700, presence or absence of contact between the user and the electronic device 700, an orientation or acceleration/deceleration of the electronic device 700 and a temperature change of the electronic device 700. The sensor component 714 may also include a proximity sensor configured to detect the presence of nearby objects without any physical contact. The sensor component 714 may also include an optical sensor, such as a CMOS or CCD image sensor, for use in imaging applications. In some examples, the sensor component 714 may also include an acceleration sensor, a gyroscope sensor, a magnetic sensor, a pressure sensor or a temperature sensor.

The communication component 716 is configured to facilitate wired or wireless communication between the electronic device 700 and other devices. The electronic device 700 may access a wireless network based on communication standards, such as WiFi, 2G or 3G, 4G or 5G, or a combination thereof. In an exemplary example, a communication component 716 receives broadcast signals or broadcast associated information from an external broadcast management system via a broadcast channel. In an example, the communication component 716 further includes a near field communication (NFC) module to facilitate short-range communication. For example, the NFC module may be implemented based on radio frequency identification (RFID) technology, infrared data association (IrDA) technology, ultra wide band (UWB) technology, Bluetooth (BT) technology, and other technologies.

In an example, the electronic device 700 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above power supply method of the electronic device.

For the fourth aspect, in an example of the invention, a non-transitory computer-readable storage medium including instructions is further provided, such as a memory 704 including instructions executable by the processor 720 of the electronic device 700 to complete the above power supply method of the electronic device. For example, the non-transitory computer-readable storage medium may be an ROM, a random access memory (RAM), a CD-ROM, a magnetic tape, a floppy disk, an optical data storage device, etc.

## Claims

1. An interactive method performed by an electronic device that establishes a connection with a robot, the interactive method comprising:
displaying (S101) a control interface of the robot, wherein the control interface comprises a motion map (201) and an identifier of the robot (202); and
in response to an operation of a user on the identifier of the robot (202), controlling (S102) the robot to perform corresponding functions in a real environment corresponding to the motion map (201);
which method is **characterized in that**:
the controlling (S102) the robot to perform corresponding functions in a real environment corresponding to the motion map (201) in response to an operation of a user on the identifier of the robot (202) comprises:
in response to the operation of the user on the identifier of the robot (202), controlling the robot to perform a preset reminding action.

2. The interactive method according to claim 1, wherein the controlling (S102) the robot to perform corresponding functions in a real environment corresponding to the motion map (201) in response to an operation of a user on the identifier of the robot (202) comprises:
in response to the operation of the user on the identifier of the robot (202), displaying a remote control interface (209), wherein at least one remote control key is provided in the remote control interface (209); and
in response to an operation of the user on the at least one remote control key, controlling the robot to move in the real environment corresponding to the motion map (201).

3. The interactive method according to claim 2, wherein the displaying a remote control interface (209) in response to the operation of the user on the identifier of the robot (202) comprises:
in response to the operation of the user on the identifier of the robot (202), displaying a control mode selection interface (208), wherein the control mode selection interface (208) is provided with a remote control option; and
in response to an operation of the user on the remote control option, displaying the remote control interface (209).

4. The interactive method according to claim 3, wherein the control mode selection interface (208) is further provided with a device search option (212); and
the interactive method further comprises:
in response to an operation of the user on the device search option (212), controlling the robot to perform a preset reminding action.

5. The interactive method according to claim 2, wherein the remote control interface (209) is further provided with a device search option (212);
the interactive method further comprises:
in response to an operation of the user on the device search option (212), controlling the robot to perform a preset reminding action.

6. The interactive method according to any one of claims 4 to 5, wherein the preset reminding action comprises at least one of the following: audio playback, vibration, and light flicker.

7. The interactive method according to claim 1, wherein the controlling (S102) the robot to perform corresponding functions in a real environment corresponding to the motion map (201) in response to an operation of a user on the identifier of the robot (202) comprises:
in response to the operation of the user for moving the identifier of the robot (202) to a target position in the motion map (201), controlling the robot to move to a position corresponding to the target position in the real environment.

8. The interactive method according to claim 7, wherein the controlling the robot to move to a position corresponding to the target position in the real environment in response to the operation of the user for moving the identifier of the robot (202) to a target position in the motion map (201) comprises:
when the robot is in an operation state, in response to the operation of the user for moving the identifier of the robot (202) to the target position in the motion map (201), controlling the robot to stop operating and controlling the robot to operate after the robot moves to the position corresponding to the target position in the real environment.

9. The interactive method according to claim 8, wherein the motion map (201) comprises a plurality of motion zones, and each motion zone corresponds to a local space in the real environment and has a corresponding operation mode; and
the controlling the robot to stop operating and controlling the robot to operate after the robot moves to the position corresponding to the target position in the real environment comprises:
controlling the robot to stop operating, and controlling the robot to operate in an operation mode corresponding to a target zone after the robot is moved to the local space corresponding to the target zone in the real environment, wherein the target zone is a motion zone to which the target position belongs.

10. The interactive method according to claim 9, wherein after the robot completes the operation in the local space corresponding to the target zone, the interactive method further comprises at least one of the following:
controlling the robot to move to a base station in the real environment; and
in the real environment, controlling the robot to move to a local space corresponding to a first motion zone in a non-operation state in an operation sequence, wherein the operation sequence comprises the plurality of motion zones arranged in sequence.

11. The interactive method according to claim 9, wherein the controlling the robot to move to a position corresponding to the target position in the real environment in response to the operation of the user for moving the identifier of the robot (202) to a target position in the motion map (201) comprises:
in response to a start position of a motion operation of the user and the target position being respectively in different motion zones in the motion map (201), controlling the robot to move to a position corresponding to the target position in the real environment.

12. An electronic device (700), comprising:
a processor (720);
a display and
a memory (704) configured to store executable instructions for the processor (720),
wherein the processor (720) is configured to execute the executable instructions, so as to implement the interactive method of any one of claims 1 to 11.

13. A computer program comprising instructions to cause the electronic device of claim 12 to execute the steps of any one of claims 1 to 11.

14. A computer-readable medium having stored thereon the computer program of claim 13.

## Patentansprüche

1. Interaktives Verfahren, das von einer elektronischen Vorrichtung durchgeführt wird, die eine Verbindung mit einem Roboter herstellt, wobei das interaktive Verfahren umfasst:
Anzeigen (S101) einer Steuerungsschnittstelle des Roboters, wobei die Steuerungsschnittstelle eine Bewegungskarte (201) und eine Kennung des Roboters (202) aufweist; und
als Reaktion auf eine Benutzerbetätigung an der Kennung des Roboters (202), Steuern (S102) des Roboters, so dass dieser entsprechende Funktionen in einer realen Umgebung entsprechend der Bewegungskarte (201) durchführt;
wobei das Verfahren **dadurch gekennzeichnet ist, dass**:
das Steuern (S102) des Roboters, so dass dieser entsprechende Funktionen in einer realen Umgebung entsprechend der Bewegungskarte (201) als Reaktion auf eine Benutzerbetätigung an der Kennung des Roboters (202) durchführt, umfasst:
als Reaktion auf die Benutzerbetätigung an der Kennung des Roboters (202), Steuern des Roboters, so dass dieser eine voreingestellte Erinnerungsaktion durchführt.

2. Interaktives Verfahren nach Anspruch 1, wobei das Steuern (S102) des Roboters, so dass dieser entsprechende Funktionen in einer realen Umgebung entsprechend der Bewegungskarte (201) als Reaktion auf eine Benutzerbetätigung an der Kennung des Roboters (202) durchführt, umfasst:
als Reaktion auf die Benutzerbetätigung an der Kennung des Roboters (202), Anzeigen einer Fernsteuerungsschnittstelle (209), wobei mindestens eine Fernsteuerungstaste in der Fernsteuerungsschnittstelle (209) vorgesehen ist; und
als Reaktion auf eine Benutzerbetätigung auf der mindestens einen Fernsteuerungstaste, Steuern des Roboters, so dass dieser sich in der realen Umgebung entsprechend der Bewegungskarte (201) bewegt.

3. Interaktives Verfahren nach Anspruch 2, wobei das Anzeigen einer Fernsteuerungsschnittstelle (209) als Reaktion auf die Benutzerbetätigung an der Kennung des Roboters (202) umfasst:
als Reaktion auf die Benutzerbetätigung an der Kennung des Roboters (202), Anzeigen einer Steuermodus-Auswahlschnittstelle (208), wobei die Steuermodus-Auswahlschnittstelle (208) mit einer Fernsteuerungsoption versehen ist; und
als Reaktion auf eine Benutzerbetätigung an der Fernsteuerungsoption, Anzeige der Fernsteuerungsschnittstelle (209).

4. Interaktives Verfahren nach Anspruch 3, wobei die Steuermodus-Auswahlschnittstelle (208) ferner mit einer Gerätesuchoption (212) versehen ist; und
wobei das interaktive Verfahren ferner umfasst:
als Reaktion auf eine Benutzerbetätigung an der Gerätesuchoption (212), Steuern des Roboters, so dass dieser eine voreingestellte Erinnerungsaktion durchführt.

5. Interaktives Verfahren nach Anspruch 2, wobei die Fernsteuerungsschnittstelle (209) ferner mit einer Gerätesuchoption (212) versehen ist;
wobei das interaktive Verfahren ferner umfasst:
als Reaktion auf eine Benutzerbetätigung an der Gerätesuchoption (212), Steuern des Roboters, so dass dieser eine voreingestellte Erinnerungsaktion durchführt.

6. Interaktives Verfahren nach einem der Ansprüche 4 bis 5, wobei die voreingestellte Erinnerungsaktion mindestens eines aus Folgendem umfasst: Audiowiedergabe, Vibration und Lichtflackern.

7. Interaktives Verfahren nach Anspruch 1, wobei das Steuern (S102) des Roboters, so dass dieser entsprechende Funktionen in einer realen Umgebung entsprechend der Bewegungskarte (201) als Reaktion auf eine Benutzerbetätigung an der Kennung des Roboters (202) durchführt, umfasst:
als Reaktion auf die Benutzerbetätigung zum Bewegen der Kennung des Roboters (202) zu einer Zielposition in der Bewegungskarte (201), Steuern des Roboters, so dass dieser sich zu einer Position bewegt, die der Zielposition in der realen Umgebung entspricht.

8. Interaktives Verfahren nach Anspruch 7, wobei das Steuern des Roboters, so dass dieser sich zu einer Position bewegt, die der Zielposition in der realen Umgebung entspricht, als Reaktion auf die Benutzerbetätigung zum Bewegen der Kennung des Roboters (202) zu einer Zielposition in der Bewegungskarte (201) umfasst:
wenn sich der Roboter in einem Betriebszustand befindet, als Reaktion auf die Benutzerbetätigung zum Bewegen der Kennung des Roboters (202) zu der Zielposition in der Bewegungskarte (201), Steuern des Roboters, so dass dieser den Betrieb stoppt, und Steuern des Roboters, so dass dieser arbeitet, nachdem sich der Roboter zu der Position bewegt hat, die der Zielposition in der realen Umgebung entspricht.

9. Interaktives Verfahren nach Anspruch 8, wobei die Bewegungskarte (201) eine Vielzahl von Bewegungszonen aufweist, und jede Bewegungszone einem lokalen Raum in der realen Umgebung entspricht und einen entsprechenden Betriebsmodus aufweist; und
das Steuern des Roboters, so dass dieser den Betrieb stoppt, und das Steuern des Roboters, so dass dieser arbeitet, nachdem sich der Roboter zu der Position bewegt hat, die der Zielposition in der realen Umgebung entspricht, umfasst:
Steuern des Roboters, so dass dieser den Betrieb stoppt, und Steuern des Roboters, so dass dieser in einem Betriebsmodus arbeitet, der einer Zielzone entspricht, nachdem der Roboter zu dem lokalen Raum bewegt wurde, welcher der Zielzone in der realen Umgebung entspricht, wobei die Zielzone eine Bewegungszone ist, zu der die Zielposition gehört.

10. Interaktives Verfahren nach Anspruch 9, wobei das interaktive Verfahren, nachdem der Roboter den Vorgang in dem lokalen Raum, welcher der Zielzone entspricht, abgeschlossen hat, ferner mindestens eines aus Folgendem umfasst:
Steuern des Roboters, so dass dieser sich zu einer Basisstation in der realen Umgebung bewegt; und
in der realen Umgebung, Steuern des Roboters, so dass dieser sich zu einem lokalen Raum bewegt, der einer ersten Bewegungszone in einem Nicht-Betriebszustand in einer Vorgangssequenz entspricht, wobei die Betriebssequenz die Vielzahl von nacheinander angeordneten Bewegungszonen aufweist.

11. Interaktives Verfahren nach Anspruch 9, wobei das Steuern des Roboters, so dass dieser sich zu einer Position bewegt, die der Zielposition in der realen Umgebung entspricht, als Reaktion auf die Benutzerbetätigung zum Bewegen der Kennung des Roboters (202) zu einer Zielposition in der Bewegungskarte (201) umfasst:
als Reaktion darauf, dass eine Startposition eines Bewegungsvorgangs des Benutzers und die Zielposition jeweils in unterschiedlichen Bewegungszonen in der Bewegungskarte (201) liegen, Steuern des Roboters, so dass dieser sich zu einer Position bewegt, die der Zielposition in der realen Umgebung entspricht.

12. Elektronische Vorrichtung (700), die aufweist:
einen Prozessor (720);
eine Anzeige, und
einen Speicher (704), der dazu ausgebildet ist, ausführbare Anweisungen für den Prozessor (720) zu speichern,
wobei der Prozessor (720) dazu ausgebildet ist, die ausführbaren Anweisungen auszuführen, um das interaktive Verfahren nach einem der Ansprüche 1 bis 11 zu implementieren.

13. Computerprogramm, das Anweisungen aufweist, welche die elektronische Vorrichtung nach Anspruch 12 veranlassen, die Schritte nach einem der Ansprüche 1 bis 11 auszuführen.

14. Computerlesbares Medium, auf dem das Computerprogramm nach Anspruch 13 gespeichert ist.

## Revendications

1. Procédé interactif mis en œuvre par un dispositif électronique qui établit une connexion avec un robot, le procédé interactif comprenant les étapes consistant à :
afficher (S101) une interface de commande du robot, dans lequel l'interface de commande comprend un carte de déplacement (201) et un identificateur du robot (202) ; et
en réponse à une opération de l'utilisateur sur l'identificateur du robot(202), commander (S102) le robot pour qu'il exécute des fonctions correspondantes dans un environnement réel correspondant à la carte de déplacement (201) ;
lequel procédé étant **caractérisé en ce que** :
l'étape de commande (S102) du robot pour qu'il exécute des fonctions correspondantes dans un environnement réel correspondant à la carte de déplacement (201) en réponse à une opération d'un utilisateur sur l'identificateur du robot (202) consiste à :
en réponse à l'opération de l'utilisateur sur l'identificateur du robot (202), commander le robot pour qu'il exécute une action de rappel préfinie.

2. Procédé interactif selon la revendication 1, dans lequel l'étape de commande (S102) du robot pour qu'il exécute des fonctions correspondantes dans un environnement réel correspondant à la carte de déplacement (201) en réponse à une opération d'un utilisateur sur l'identificateur du robot (202) consiste à :
en réponse à l'opération de l'utilisateur sur l'identificateur du robot (202), afficher une interface de commande à distance (209), dans lequel au moins une touche de commande à distance est prévue dans l'interface de commande à distance (209) ; et
en réponse à une opération de l'utilisateur sur l'au moins une touche de commande à distance, commander le robot pour qu'il se déplace dans l'environnement réel correspondant à la carte de déplacement (201).

3. Procédé interactif selon la revendication 2, dans lequel l'affichage d'une interface de commande à distance (209) en réponse à l'opération de l'utilisateur sur l'identificateur du robot (202) comprend les étapes consistant à :
en réponse à l'opération de l'utilisateur sur l'identificateur du robot (202), afficher une interface de sélection de mode de commande (208), dans lequel l'interface de sélection de mode de commande (208) est dotée d'une option de commande à distance ; et
en réponse à une opération de l'utilisateur sur l'option de commande à distance, afficher l'interface de commande à distance (209).

4. Procédé interactif selon la revendication 3, dans lequel l'interface de sélection de mode de commande (208) est en outre dotée d'une option de recherche de dispositif (212) ; et
le procédé interactif comprend en outre l'étape consistant à :
en réponse à une opération de l'utilisateur sur l'option de recherche de dispositif (212), commander le robot pour qu'il exécute une action de rappel prédéfinie.

5. Procédé interactif selon la revendication 2, dans lequel l'interface de commande à distance (209) est en outre dotée d'une option de recherche de dispositif (212) ;
le procédé interactif comprend en outre l'étape consistant à :
en réponse à une opération de l'utilisateur sur l'option de recherche de dispositif (212), commander le robot pour qu'il exécute une action de rappel prédéfinie.

6. Procédé interactif selon l'une ou l'autre des revendications 4 et 5, dans lequel l'action de rappel prédéfinie comprend au moins l'une des actions suivantes : une lecture audio, une vibration et un clignotement.

7. Procédé interactif selon la revendication 1, dans lequel l'étape de commande (S102) du robot pour qu'il exécute des fonctions correspondantes dans un environnement réel correspondant à la carte de déplacement (201) en réponse à une opération d'un utilisateur sur l'identificateur du robot (202) consiste à :
en réponse à l'opération de l'utilisateur dont l'objet est de déplacer l'identificateur du robot (202) jusqu'à une position cible dans la carte de déplacement (201), commander le robot pour qu'il se déplace jusqu'à une position correspondant à la position cible dans l'environnement réel.

8. Procédé interactif selon la revendication 7, dans lequel l'étape de commande du robot pour qu'il se déplace jusqu'à une position correspondant à la position cible dans l'environnement réel en réponse à l'opération de l'utilisateur dont l'objet est de déplacer l'identificateur du robot (202) jusqu'à une position cible dans la carte de déplacement (201) consiste à :
lorsque le robot est dans un état de fonctionnement, en réponse à l'opération de l'utilisateur dont l'objet est de déplacer l'identificateur du robot (202) jusqu'à la position cible dans la carte de déplacement (201), commander le robot pour interrompre le fonctionnement et commander le robot pour qu'il fonctionne après le déplacement du robot jusqu'à la position correspondant à la position cible dans l'environnement réel.

9. Procédé interactif selon la revendication 8, dans lequel la carte de déplacement (201) comprend une pluralité de zones de déplacement, et chaque zone de déplacement correspond à un espace local dans l'environnement réel et a un mode de fonctionnement correspondant ; et
l'étape de commande du robot pour interrompre le fonctionnement et de commande du robot pour qu'il fonctionne après le déplacement du robot jusqu'à la position correspondant à la position cible dans l'environnement réel consiste à :
commander le robot pour interrompre le fonctionnement, et commander le robot qu'il fonctionne dans un mode de fonctionnement correspondant à une zone cible après le déplacement du robot jusqu'à l'espace local correspondant à la zone cible dans l'environnement réel, dans lequel la zone cible est une zone de déplacement à laquelle appartient la position cible.

10. Procédé interactif selon la revendication 9, dans lequel, à la fin du fonctionnement du robot dans l'espace local correspondant à la zone cible, le procédé interactif comprend en outre au moins l'une des étapes suivantes consistant à :
commander le robot pour qu'il se déplace jusqu'à une station de base dans l'environnement réel ; et
dans l'environnement réel, commander le robot pour qu'il se déplace jusqu'à un espace local correspondant à une première zone de déplacement dans un état de non-fonctionnement lors d'une séquence de fonctionnement, dans lequel la séquence de fonctionnement comprend les zones de la pluralité de zones de déplacement organisées en séquence.

11. Procédé interactif selon la revendication 9, dans lequel l'étape de commande du robot pour qu'il se déplace jusqu'à une position correspondant à la position cible dans l'environnement réel en réponse à l'opération de l'utilisateur dont l'objet est de déplacer l'identificateur du robot (202) jusqu'à une position cible dans la zone de déplacement (201) consiste à :
en réponse à une position de démarrage d'une opération de déplacement de l'utilisateur et au fait que la position cible est située respectivement dans des zones de déplacement différentes de la carte de déplacement (201), commander le robot pour qu'il se déplace jusqu'à une position correspondant à la position cible dans l'environnement réel.

12. Dispositif électronique (700), comprenant :
un processeur (720) ;
un afficheur et
une mémoire (704) configurée pour maintenir des instructions exécutables par le processeur (720),
dans lequel le processeur (720) est configuré pour exécuter les instructions exécutables, de façon à mettre en œuvre le procédé interactif selon l'une quelconque des revendications 1 à 11.

13. Programme d'ordinateur comprenant des instructions pour amener le dispositif électronique selon la revendication 12 à exécuter les étapes de l'une quelconque des revendications 1 à 11.

14. Support lisible par ordinateur comportant le programme d'ordinateur selon la revendication 13 mémorisé en son sein.
